# EUROPÄISCHE PATENTSCHRIFT

(11) **EP 0 810 931 B1**
(45) Veröffentlichungstag und Bekanntmachung des Hinweises auf die Patenterteilung: **16.12.1998**
(21) Anmeldenummer: 96905786.8
(22) Anmeldetag: 23.02.1996
(51) Int. Cl.: B60R 21/00

(54) **KRAFTFAHRZEUG-BETÄTIGUNGSEINHEIT**
MOTOR VEHICLE ACTUATING UNIT
UNITE D'ACTIONNEMENT POUR AUTOMOBILE

(30) Priorität: 24.02.1995 DE 19506607
(43) Veröffentlichungstag der Anmeldung: 10.12.1997
(73) Patentinhaber: ITT Automotive Europe GmbH, 60488 Frankfurt (DE)
(72) Erfinder: STADLER, Brün-Friedrich, D-61184 Karben (DE); KÖNIG, Harald, D-61239 Ober-Mörlen (DE); BÖHM, Peter, D-61381 Friedrichsdorf (DE); BERGELIN, Klaus, D-65527 Niedernhausen (DE); LÖW, Albin, D-61184 Karben (DE); BISCHOFF, Gilbert, D-65795 Hattersheim (DE)
(86) Internationale Anmeldenummer: EP9600759
(87) Internationale Veröffentlichungsnummer: WO9626086

(56) Entgegenhaltungen:
- DE-A- 4 415 642
- DE-B- 2 013 638
- GB-A- 2 031 814
- GB-A- 2 230 493
- US-A- 4 410 212

## Beschreibung

Die Erfindung betrifft eine Kraftfahrzeug-Betätigungseinheit mit einem Hauptzylinder, der an einer in dem Kraftfahrzeug angeordneten Wand befestigt ist.

Es ist bekannt, daß insbesondere bei Unfällen, die Verformungen des Kraftfahrzeugvorderteiles zur Folge haben, die Gefahr besteht, daß in diesem Bereich angeordnete Teile, insbesondere die an der Spritzwand angeordnete Betätigungseinheit der hydraulischen Bremsanlage, den Raum unmittelbar vor dem Fahrer soweit verringern, daß eine Verletzungsgefahr besteht. Daher ist es beispielsweise aus der DE 43 04 565 bekannt, Mittel vorzusehen, die bei einem zu Verformungen des Kraftfahrzeugsvorderteils führenden Unfall einen erhöhten Volumenbedarf der Bremsanlage simulieren und somit eine Verlängerung des Betätigungsweges der Betätigungseinheit ermöglichen. Dazu sind hydraulische Ventile vorgesehen, die bei einem Unfall betätigt werden müssen, um die gewünschte Wirkung zu erzielen.

Ein Nachteil dieser bekannten Anordnung ist darin zu sehen, daß an die Ventile relativ hohe Anforderungen gestellt werden müssen, da sie im Falle eines Unfalls einwandfrei und schnell funktionieren müssen, während sie im Normalfall - oft über Jahre hinaus - unbetätigt bleiben.

Die deutsche Auslegeschrift DE 20 13 638 AS und die britische Patentanmeldung GB 2 230 493 offenbaren Betätigungseinheiten, bei denen im Falle eines Unfalls die gesamte Betätigungseinheit mittels einer nicht zur Betätigungseinheit gehörenden schrägen Aufprallfläche zur Seite gedrückt wird.

Die Bewegungsrichtung der Einheit sowie deren Verformungsstelle sind dabei nicht festgelegt und bei einem Unfall unter anderem von den im Fahrzeugmotorraum befindlichen Bauteilen abhängig.

Der Erfindung liegt daher die Aufgabe zugrunde, eine Kraftfahrzeug-Betätigungseinheit vorzuschlagen, die dazu geeignet ist, mit einfachen Mitteln das Verletzungsrisiko in der Fahrgastzelle des Kraftfahrzeugs im Falle eines Unfalls zu reduzieren.

Diese Aufgabe wird erfindungsgemäß dadurch gelöst, daß die Betätigungseinheit mechanische Knickmittel umfaßt, die bei einem zu Verformungen des Kraftfahrzeugvorderteils führenden Unfall ein Ausknicken des Hauptzylinders aus seiner Längsachse heraus ermöglichen. Da ein derartiges Ausknicken weitgehend ohne Kraftübertragung auf die Wand erfolgt, werden auch dem Hauptzylinder in Richtung Fahrgastzelle vorgeschaltete Bauteile nicht bzw. nur sehr geringfügig in die Fahrgastzelle verschoben, was das Verletzungsrisiko in Fußraum minimiert. Ein derartiges Ausknicken kann mittels kostengünstiger passiver Maßnahmen erzielt werden.

Die Wand kann dabei die Spritzwand des Kraftfahrzeuge oder die vordere Wand eines Bremskraftverstärkers sein. Der Hauptzylinder kann beispielsweise in einer hydraulischen Bremsanlage oder zur Kupplungsbetätigung eingesetzt sein.

Vorzugsweise ist der Hauptzylinder mittels eines zweiteiligen Befestigungselements an der Wand befestigt, dessen beide Teile bei einer durch einen Unfall hervorgerufenen Krafteinwirkung auf dem Hauptzylinder eine relative Kippbewegung zueinander gestatten.

Vorteilhafterweise besteht das zweiteilige Befestigungselement aus einem am Hauptzylinder angeordneten Wulst, der einerseits an der Wand anliegt und andererseits an einer Befestigungsplatte, die den anderen Teil des Flanschs bildet. Der Wulst ist dabei fest mit dem Hauptzylinder verbunden, während die Befestigungsplatte an der Wand, beispielsweise mittels Schrauben, befestigt ist. Dies hat den Vorteil, daß die Befestigungsplatte wie der herkömmliche Flansch eines Hauptzylinders an der Wand, insbesondere der Wand eines hydraulischen Bremskraftverstärkers befestigt werden kann, ohne daß die Wand speziell dafür modifiziert sein muß.

Die erfindungsgemäße Betätigungseinheit läßt sich also durch geringfügige Änderungen an dem Befestigungselement des Hauptzylinders und bei Beibehaltung eines herkömmlichen Bremskraftverstärkers mit einfachen Mitteln zu einer unfallsicheren Betätigungseinheit modifizieren. Natürlich ist es auch vorstellbar, die Wand des Bremskraftverstärkers teilweise dünner auszuführen, wodurch das Ausknicken erleichtert und die Verschiebung des Bremskraftverstärkers in die Fahrgastzelle noch geringer wird.

Besonders vorteilhaft ist es, wenn der Wulst im Längsschnitt des Hauptzylinders betrachtet die Form eines Kreisabschnitts aufweist, während die Befestigungsplatte in ihrem vorderen, der Wand abgewandten Bereich einen entsprechend geformten Hohlraum aufweist, an dem der Wulst anliegt, wobei der Hohlraum im hinteren Bereich mit Abstand zum Wulst ausgebildet ist. Die aneinander anliegenden gekrümmten Flächen von Wulst und Befestigungsplatte bilden eine Art Drehgelenk, während der hintere Bereich ein Abknicken des Hauptzylinders in Richtung Wand ermöglicht, wobei sich die Wand nachgebend verformen kann. Der Wulst kann dabei die Form einer Kugelzone aufweisen oder die Form eines radial vorstehenden zylindrischen Rings.

Erfindungsgemäß ist weiterhin vorgesehen, die Befestigungsplatte, mit der der Hauptzylinder an der Wand befestigt ist, mit verschieden stabilen Verbindungen an der Wand zu befestigen. Bei einem Unfall wird eine derartige asymmetrische Verbindung ungleichmäßig belastet und knickt daher leichter aus. Dabei kann die Asymmetrie dadurch erzeugt werden, daß die Befestigungsplatte an zwei Stellen festgeschraubt ist, wobei eine der Schrauben stärker, die andere schwächer ausgebildet ist. Es ist aber auch möglich, die Schrauben ungleichmäßig über den Umfang zu verteilen. Es versteht sich von selbst, daß außer Schrauben auch andere geeignete Verbindungsmöglichkeiten eingeschlossen sind.

Im allgemeinen gibt es eine bevorzugte Knickachse, um die der Hauptzylinder bei einem Unfall beim Ausknicken verkippen soll. Eine derartige bevorzugte Knickachse kann beispielsweise durch die vorgegebene Geometrie bzw. die Anordnung der Aggregate im Motorraum des Fahrzeugs vorgegeben sein. Dabei ist vorgesehen, unterhalb dieser bevorzugten Knickachse eine lösbare Verbindung der Befestigungsplatte an der Wand vorzusehen, die sich bereits bei geringer Krafteinwirkung löst und somit ein Verkippen des Hauptzylinders um die Knickachse ermöglicht. Im allgemeinen wird bevorzugt, daß der Hauptzylinder nach oben ausknickt, da Hauptzylinder meist bereits geringfügig nach oben geneigt angeordnet sind und somit bei einem Frontalaufprall ohnehin dazu neigen, nach oben ausgeknickt zu werden. Es ist hier aber auch ein seitliches Ausknicken, beispielsweise um einen oberhalb des Hauptzylinders angeordneten Behälter nicht zu zerstören, oder ein Ausknicken nach unten möglich, wobei die lösbare Verbindung entsprechend seitlich bzw. oberhalb der Knickachse anzuordnen ist.

Die lösbare Verbindung kann beispielsweise eine Rast- oder Klemmverbindung sein, vorzugsweise wird aber eine Schraube mit einer Sollbruchstelle verwendet, da diese relativ genau auf eine gewünschte Sollbelastbarkeit ausgelegt werden kann.

Ist der Hauptzylinder waagerecht oder nur mit einer geringen Neigung im Fahrzeug angeordnet, so wird er erfindungsgemäß mit einer oder mehreren Kraftaufnahmekonturen versehen, an die bei einem Unfall in Richtung auf den Hauptzylinder verschobene Bauteile anschlagen können und wobei durch die Form der Kontur das gewünschte Abknicken des Hauptzylinders unterstützt wird.

Vorteilhafterweise ist dazu eine schräge Aufprallfläche vorgesehen, wobei die Aufprallkraft durch die schräge Fläche als Drehmoment wirkt, das den Hauptzylinder aus seiner Längsachse verkippt. Die Aufprallfläche ist vorzugsweise am vorderen Ende des Hauptzylinders ausgebildet, insbesondere kann die vordere, üblicherweise senkrecht auf der Achse des Hauptzylinders stehende Endfläche bezüglich der bevorzugten Knickachse verkippt sein. Es ist aber auch möglich, entsprechend schräge Flächen an anderen Stellen des Hauptzylinders, beispielsweise seitlich, anzubringen.

Die erfindungsgemäße Aufprallfläche kann eben oder gekrümmt sein, wobei die Krümmung beispielsweise zylindrisch oder kalottenförmig ausgebildet sein kann. Die Krümmung verhindert ein Beschädigen von an der Aufprallfläche anschlagenden Bauteilen, beispielsweise einer Batterie, während eine ebene Fläche eine günstige Kraftübertragung ermöglicht.

Weitere Merkmale und Vorteile der Erfindung gehen aus der folgenden Beschreibung zweier Ausführungsbeispiele anhand der beiliegenden Zeichnungen hervor. Dabei zeigen:
- Fig. 1: ein erstes Ausführungsbeispiel der erfindungsgemäßen Kraftfahrzeug-Betätigungseinheit im Normalzustand,
- Fig. 2: die Kraftfahrzeug-Betätigungseinheit aus Fig. 1 während eines Unfalls,
- Fig. 3: ein zweites Ausführungsbeispiel der erfindungsgemäßen Kraftfahrzeug-Betätigungseinheit im Normalzustand,
- Fig. 4: in geschnittener Ansicht ein Ausführungsbeispiel eines erfindungsgemäßen Zylinderkolbens mit einer Sollbruchstelle und
- Fig. 5: ein weiteres Ausführungsbeispiel ähnlich Fig. 3, in der Ansicht von rechts in Richtung der Längsachse L.

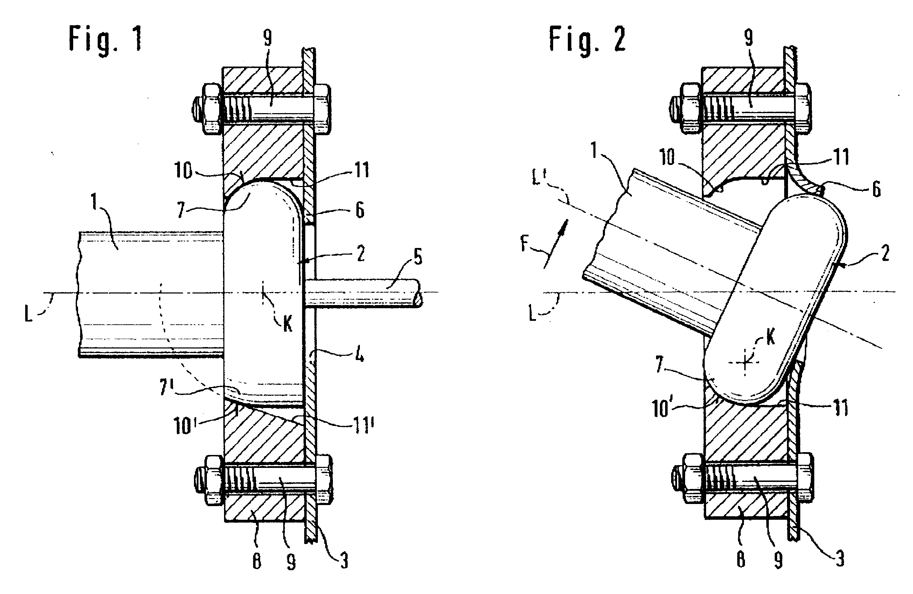

In Fig. 1 erkennt man den nur teilweise und schematisch dargestellten Hauptzylinder 1, der mit einem umlaufenden Wulst 2 an einer Wand 3 anliegt. Durch eine Öffnung 4 der Wand 3 ragt eine Betätigungsstange 5 zur Betätigung des Hauptzylinders 1. Der Durchmesser der Öffnung 4 ist so bemessen, daß der an dem Wulst 2 anliegende Ringbereich 6 der Wand 3 zwar ausreichend stabil aber dennoch im Falle eines Unfalls relativ leicht verformbar ist. Dies ist zu Fig. 2 näher erläutert. Der über den Hauptzylinder 1 herausstehende Teil 7 des Wulst 2 weist in der in der Zeichenebene liegenden Projektion die Form eines Kreisabschnitts auf. In der unteren Hälfte der Fig. 1 ist der Wulst 2 als Kugelzone 7' ausgebildet, wobei der gedachte weitere Verlauf der Kugel punktiert angedeutet ist. Es versteht sich, daß es sich hierbei um zwei alternative Ausgestaltungsformen handelt. Die Befestigungsplatte 8 ist mittels zweier Schrauben 9 an

der Wand 3 befestigt und weist im vorderen, in der Abbildung linken Bereich eine gekrümmte Anlagefläche 10 auf, mittels der.sie am Wulst 2 anliegt und die in eine zylindrische, vom Wulst 2 beabstandete Fläche 11 übergeht, wie in der oberen Hälfte der Fig. 1 dargestellt.

Die in der unteren Hälfte der Fig. 1 abgebildete Anlagefläche 10' liegt entsprechend an der Kugelzone 7' an und geht in einen kegelstumpfförmigen Bereich 11' über.

Wirkt bei einem Unfall eine Kraft in Richtung der Längsachse L des Hauptzylinders 1 auf diesen ein, so verformt der Wulst 2 den gesamten Ringbereich 6 und verschiebt sich nach rechts, ohne dabei eine größere Kraft auf die Wand 3 zu über tragen. Eine derartige genau in Richtung der Achse L liegende Krafteinwirkung ist in der Realität extrem unwahrscheinlich. Im allgemeinen wird eine etwas schräg dazu einwirkende Kraft auftreten, zumal Hauptzylinder im allgemeinen bereits zumindest geringfügig nach oben geneigt im Fahrzeug angeordnet sind. Der Hauptzylinder 1 führt dann eine Kippbewegung um eine ungefähr senkrecht zu seiner Längsachse L liegende Kippachse K aus.

In Fig. 2 ist dargestellt, wie eine schräg nur Längsachse L einwirkenden Kraft F den Hauptzylinder 1 verkippt. Die Kraft F wirkt von unten, wodurch ein Drehmoment auf den Hauptzyiinder 1 ausgeübt wird. Die Anlagefläche 10 der Befestigungsplatte 8 und die Oberfläche des Teils 7 bilden eine Art Kugelgelenk, um das der Hauptzylinder 1 kippen kann, während im oberen Bereich der Fig. 2 der Ringbereich 6 durch die Hebelwirkung des Wulsts 2 nachgibt und ein Ausknicken des Hauptzylinders 1 ermöglicht. Der Hauptzylinder 1 verkippt somit um die Kippachse K nach oben, was eine Verkürzung der axialen Ausdehnung der Betätigungseinheit zur Folge hat, ohne daß gleichzeitig ein entsprechend großes Eindringen in den Bereich hinter der Wand 3 erfolgt.

Damit nicht nur die Flächenpressung zwischen den Anlageflächen 10,10' und den Kugelzonen 7,7' bezüglich der Achse L des Hauptzylinders 1 verdrehhindernd wirkt, kann zusätzlich ein nicht dargestelltes Scherelement zwischen den Anlageflächen 10,10' und den Kugelzonen 7,7 angebracht werden. Eine einfache Lösung stellt beispielsweise die Ausführung des Scherelementes als Scherstift dar.

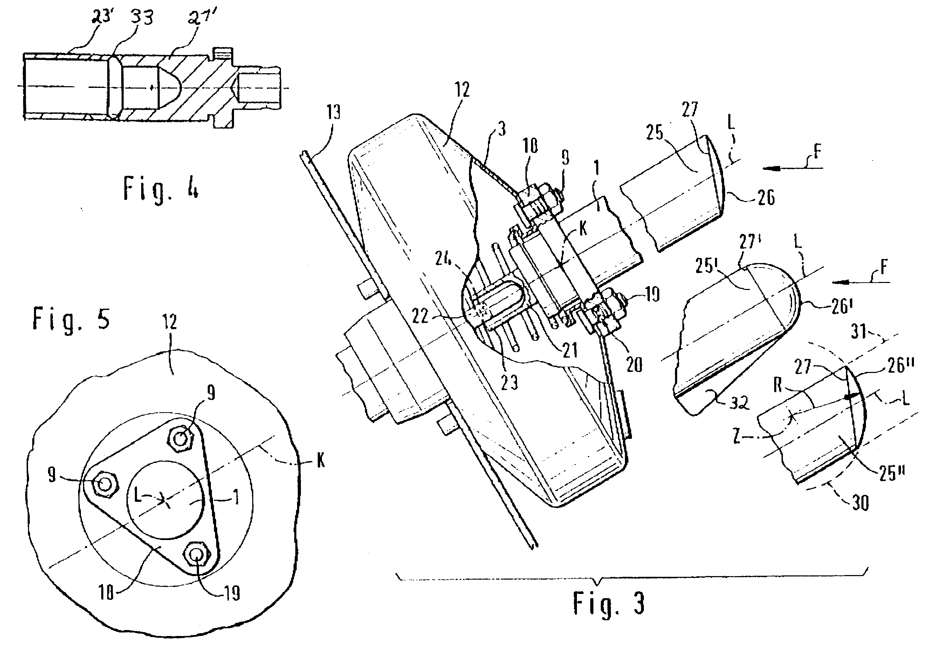

Fig. 3 zeigt ein zweites Ausführungsbeispiel der erfindungsgemäßen Kraftfahrzeugsbetätigungseinheit mit einem Hauptzylinder 1, der an der Wand 3 eines Bremskraftverstärkers 12 befestigt ist, welcher seinerseits an der Spritzwand 13 eines Kraftfahrzeuges befestigt ist. Der Bremskraftverstärker 12 ist teilweise geschnitten dargestellt, ebenso wie die Befestigungsplatte 18, die fest mit den Hauptzylinder 1 verbunden ist. Die Befestigungsplatte 18 ist mittels zweier Schrauben 9,19 an der Wand 3 befestigt, wobei die Schraube 19 eine Sollbruchstelle 20 aufweist. Eine schräg zur Längsachse L des Hauptzylinders 1 einwirkende Kraft F bewirkt, daß die Schraube 19 an der Sollbruchstelle 20 bricht und somit ein Verkippen des Hauptzylinders 1 um die Kippachse K ermöglicht wird. Statt einer Sollbruchstelle 20 kann auch eine Schraube 19 mit komplett kleinerem Durchmesser bzw. eine Schraube aus einem Material geringer Festigkeit vorgesehen sein.

Zur Betätigung des Hauptzylinders 1 ragt ein Schaft 21 eines im Hauptzylinder 1 geführten Kolbens aus dem rückwärtigen Bereich des Hauptzylinders 1 heraus, In dem Schaft 21 greift eine Betätigungsstange 22 an. Um ein Verkippen des Hauptzylinders 1 im Crashfall zu erleichtern, ist der Schaft 21 in seinem Endbereich 23 dünnwandig ausgebildet. Eine dazu alternative Ausführungsform wird im Zusammenhang mit Fig. 4 beschrieben. Der Endbereich 23 kann sich daher beim Verkippen des Hauptzylinders 1 leicht verformen, wenn er mit der Betätigungsstange 22 in Berührung kommt. Die Betätigungsstange 22 kann zusätzlich mit einer hier nur gestrichelt angedeuteten Sollbruchstelle 24 versehen sein, um das Ausknicken des Hauptzylinders 1 zusätzlich zu erleichtern.

Das vordere Ende 25 des Hauptzylinders 1, der hier nicht in voller Länge dargestellt ist, ist mit einer Aufprallfläche 26 versehen, die im wesentlichen schräg zur Längsachse L angeordnet ist und eine geringfügige Krümmung aufweist. Die dargestellte Aufprallfläche 20 hat die Form einer Kugelkalotte, die an einer gedachten schrägen Endfläche 27 des vorderen Endes 25 angesetzt ist.

Als erste Alternative dazu ist ebenfalls in Fig. 3 das vordere Ende 25' abgebildet, welches mit einer im wesentlichen halbkugelförmigen Aufprallfläche 26' versehen ist, die in einer senkrecht auf der Längsachse L stehenden Endfläche 27' angeordnet ist. Desweiteren kann das Ende 25' zusätzlich mit einem Abschnitt 32 versehen sein, der das Abknicken des Hauptzylinders 1 weiter erleichtert. In Fig. 3 ist dieser Abschnitt 32 als eine sich zum vorderen Ende 25' hin radial verjüngende Rampe 32 ausgebildet, die an einer zur Unterstützung der gewünschten Knickrichtung geeigneten Stelle am Umfang des Hauptzylinders 1 angebracht ist.

Als zweite Alternative zur Gestaltung des vorderen Endes des Hauptzylinders 1 ist ebenfalls in Fig. 3 ein vorderes Ende 25'' abgebildet, welches mit einer Aufprallfläche 26'' versehen ist. Die Aufprallfläche 26'' entspricht dem Bereich eines gedachten Zylinders 30 mit dem Radius R, dessen Achse Z senkrecht zur Längsachse L steht, diese aber nicht notwendigerweise schneidet, und der sich innerhalb einer gedachten Verlängerung der Mantelfläche 31 des Hauptzylinders 1 befindet. Die gedachten Teile Zylinder 30, Mantelfläche 31 und Radius R sind in Fig. 3 gestrichelt abgebildet.

Fig. 4 zeigt eine Schnittansicht einer weiteren Ausführungsform des erfindungsgemäßen Hauptzylinderkolbens. In dieser alternativen Ausführungsform ist der in die Betätigungsstange 22 eingreifende Kolbenschaft 21' mit zumindest einer Sollbruchstelle 31 versehen. Die Sollbruchstelle 31 ist dabei bevorzugt als Nut mit einem Radius von etwa 1,5 mm ausgebildet. Natürlich sind auch andere Kerbformen möglich, wobei die genaue Form der Sollbruchnut 31 einen Kompromiß zwischen der Stabilität des Kolbens und der gewünschten Nachgiebigkeit darstellt. Insbesondere ist es aber auch denkbar, anstelle einer Nut 31 mehrere hintereinanderliegende Nuten im Kolbenschaft 21' anzubringen, wodurch die Nachgiebigkeit weiter erhöht wird. Mittels der in Fig. 4 gezeigten Sollbruchstelle 31 kann der Endbereich 23' des Schaftes 21' im Vergleich zur früheren Ausführungsform dickwandiger gestaltet sein. Dies ist ein besonderer Vorteil, weil sich extrem dünnwandige Teile nur schwierig und damit kostenintensiv herstellen lassen.

Fig. 5 zeigt eine Ansicht des Hauptzylinders 1 in Richtung der Achse L. Man erkennt, daß die Befestigungsplatte 18 im Unterschied zu Fig. 3 oberhalb der Kippachse K mittels zweier Schrauben 9 am nur teilweise dargestellten Bremskraftverstärker 12 befestigt ist, während unterhalb der Achse K nur eine Schraube 19 vorgesehen ist, die mit aber auch ohne Sollbruchstelle ausgebildet sein kann.

Erfindungsgemäß kann der Hauptzylinder 1 also mit einem zweiteiligen Flansch versehen werden, wobei ein Teil des Flansches als Befestigungsplatte 8 ausgebildet ist, die auf einem am Hauptzylinder 1 angeformten kugelabschnittförmigen Wulst 2 geführt wird. Die Befestigungsplatte 8 verspannt den Hauptzylinder 1 gegen die Wand 3 eines Bremskraftverstärkers. Dadurch wird gewährleistet, daß der Hauptzylinder 1 bei einem Unfall nach hinten ausweichen bzw. ausknicken kann, ohne eine allzu große Kraft auf die Wand 3 des Bremskraftverstärkers zu übertragen.

Eine Deformation der Spritzwand 13 bei einem Frontalaufprall wird erfindungsgemäß verhindert, indem die über den Hauptzylinder 1 und ggf. den Bremskraftverstärker 12 auf die Spritzwand 13 bzw. die Wand 3 ausgeübte Kraft durch eine vorgegebene Kraftaufnahmekontur am vorderen Ende 25 des Hauptzylinders abgeleitet wird, wodurch ein rechtzeitiges Abknicken des Hauptzylinders 1 eingeleitet wird. Durch eine Sollbruchstelle 20 und eine dünnwandige Ausbildung des Schafts 21 wird dieses Abknicken passiv unterstützt.

## Patentansprüche

1. Betätigungseinheit für ein Kraftfahrzeug mit einem Hauptzylinder (1) der an einer in dem Kraftfahrzeug angeordneten Wand (3) befestigt ist, **dadurch gekennzeichnet**, **daß** die Betätigungseinheit mechanische Knickmittel (2, 8, 20, 24, 26, 26', 26'', 32, 33) umfaßt, die bei einem zu Verformungen des Kraftfahrzeugvorderteils führenden Unfall ein Ausknicken des Hauptzylinders (1) aus seiner Längsachse (L) heraus ermöglichen.

2. Betätigungseinheit nach Anspruch 1, dadurch **gekennzeichnet**, daß der Hauptzylinder (1) mittels eines zweiteiligen Befestigungselements (2, 8) befestigt ist, dessen beide Teile (2, 8) bei einem Unfall eine Kippbewegung relativ zueinander ausführen können.

3. Betätigungseinheit nach Anspruch 2, dadurch **gekennzeichnet**, daß das Befestigungselement aus einem am Hauptzylinder (1) angeordneten Wulst (2) und eine Befestigungsplatte (8) besteht, wobei der Wulst (2) einerseits an der Wand (3) und andererseits an der Befestigungsplatte (8) anliegt.

4. Betätigungseinheit nach Anspruch 3, dadurch **gekennzeichnet**, daß der Wulst (2) im Längsschnitt des Hauptzylinders (1) betrachtet die Form eines Kreisabschnitts aufweist und die Befestigungsplatte (8) in ihrem vorderen, der Wand (3) abgewandten Bereich am Wulst (2) anliegend und im hinteren Bereich mit Abstand zum Wulst(2) ausgebildet ist.

5. Betätigungseinheit nach einem der vorhergehenden Ansprüchen, dadurch **gekennzeichnet**, daß die an Hauptzylinder (1) angeordneten Wulst (2) über ein Scherelement mit der Befestigungsplatte (8) verbunden ist.

6. Betätigungseinheit nach einem der vorhergehenden Ansprüche, dadurch **gekennzeichnet**, daß der Hauptzylinder (1) mittels einer Befestigungsplatte (8) an der Wand (3) befestigt ist, deren Verbindungsstellen mit der Wand (3) verschieden stabil ausgelegt sind.

7. Betätigungseinheit nach Anspruch 6, dadurch **gekennzeichnet**, daß oberhalb einer bevorzugten Knickachse (K) die senkrecht auf der Längsachse (L) des Hauptzylinders(1) steht, zwei Schraubverbindungen (9) angeordnet sind, während unterhalb dieser Knickachse (K) eine lösbare Verbindung (19) angeordnet ist.

8. Betätigungseinheit nach Anspruch 7, dadurch **gekennzeichnet**,daß die lösbare Verbindung durch eine Schraube(19) mit einer Sollbruchstelle (20) gebildet ist.

9. Betätigungseinheit nach Anspruch 1, dadurch **gekennzeichnet**, daß der Hauptzylinder (1) mit einer Kraftaufnahmekontur (26, 26', 26'', 32) versehen ist.

10. Betätigungseinheit nach Anspruch 9, dadurch **gekennzeichnet**, daß die Kraftaufnahmekontur als ein sich zum vorderen Ende (25,25',25'') des Hauptzylinders (1) hin radial verjüngender Abschnitt (32) ausgebildet ist.

11. Betätigungseinheit nach Anspruch 9, dadurch **gekennzeichnet**, daß die Kraftaufnahmekontur eine schräge Aufprallfläche (26, 26'') ist.

12. Betätigungseinheit nach Anspruch 9 oder Anspruch 10, dadurch **gekennzeichnet**, daß die Kraftaufnahmekontur eine gekrümmt Aufprallfläche (26, 26', 26'') ist.

13. Betätigungseinheit nach Anspruch 12, dadurch **gekennzeichnet**, daß die Aufprallfläche (26, 26''), zylindrisch oder kalottenförmig ausgebildet ist.

14. Betätigungseinheit nach Anspruch 1, dadurch **gekennzeichnet**, daß der Hauptzylinder(1) mittels einer in einem Schaft (21) eines Kolbens geführten Betätigungsstange (22) betätigbar ist, wobei der Schaft (21') mit zumindest einer Sollbruchstelle (33) versehen ist.

15. Betätigungseinheit nach Anspruch 1, dadurch **gekennzeichnet**, daß der Hauptzylinder(1) mittels einer in einem Schaft (21) eines Kolbens geführten Betätigungsstange (22) betätigbar ist, wobei der Schaft (21) dünnwandig ausgebildet ist.

16. Betätigungseinheit nach einem der Ansprüche 14 oder 15, dadurch **gekennzeichnet**, daß der Hauptzylinder(1) mittels einer in eine Schaft (21) eines Kolbens geführten Betätigungsstange (22) betätigbar ist, wobei die Betätigungsstange (22) eine Sollbruchstelle (24) aufweist.

## Claims

1. Actuating unit for a motor vehicle including a master cylinder (1) which is attached to a wall (3) in the motor vehicle,
**characterized** in that the actuating unit includes mechanical deflecting means (2, 8, 20, 24, 26, 26', 26'', 32, 33) which permit a deflecting movement of the master cylinder (1) from its longitudinal axis (L) in a crash which causes deforming impacts on the front part of the motor vehicle.

2. Actuating unit as claimed in claim 1,
**characterized** in that the master cylinder (1) is attached by a fastening element (2, 8) made up of two parts (2, 8) which permit a tilting movement relative to each other in the case of a crash.

3. Actuating unit as claimed in claim 2,
**characterized** in that the fastening element is made up of a bead (2) which is arranged on the master cylinder (1) and a mounting plate (8), and the bead (2) abuts on the wall (3), on the one hand, and on the mounting plate (8), on the other hand.

4. Actuating unit as claimed in claim 3,
**characterized** in that the bead (2) has the shape of a circular segment, as viewed in a longitudinal cross-section of the master cylinder (1), and the mounting plate (8) is designed so as to abut the bead (2) in its front area remote from the wall (3) and so as to be spaced from the bead (2) in its rear area.

5. Actuating unit as claimed in any one of the preceding claims,
**characterized** in that the bead (2) arranged on the master cylinder (1) is connected to the mounting plate (8) by way of a shearing element.

6. Actuating unit as claimed in any one of the preceding claims,
**characterized** in that the master cylinder (1) is attached to the wall (3) by way of a mounting plate (8) having connecting points with the wall (3) which have a differently stable design.

7. Actuating unit as claimed in claim 6,
**characterized** in that two screw connections (9) are arranged above a preferred deflection axis (K) which is disposed vertically to the longitudinal axis (L) of the master cylinder (1), and a detachable connection (19) is arranged below the deflection axis (K).

8. Actuating unit as claimed in claim 7,
**characterized** in that the detachable connection is provided by a screw (19) which has a preset breaking point (20).

9. Actuating unit as claimed in claim 1,
**characterized** in that the master cylinder (1) includes a force-receiving contour (26, 26', 26'', 32).

10. Actuating unit as claimed in claim 9,
**characterized** in that the force-receiving contour is configured as a portion (32) which tapers radially towards the front end (25, 25', 25'') of the master cylinder (1).

11. Actuating unit as claimed in claim 9,
**characterized** in that the force-receiving contour is an inclined contact surface (26, 26'').

12. Actuating unit as claimed in claim 8 or claim 10,
**characterized** in that the force-receiving contour is a curved contact surface (26, 26', 26'').

13. Actuating unit as claimed in claim 12,
**characterized** in that the contact surface (26, 26'') has a cylindrical or spherical design.

14. Actuating unit as claimed in claim 1,
**characterized** in that the master cylinder (1) is operable by an actuating rod (22) guided in a stem (21) of a piston, and the stem (21') has at least one preset breaking point (33).

15. Actuating unit as claimed in claim 1,
**characterized** in that the master cylinder (1) is operable by an actuating rod (22) guided in a stem (21) of a piston, and the stem (21) has a thin-walled design.

16. Actuating unit as claimed in any one of claims 14 or 15,
**characterized** in that the master cylinder (1) is operable by an actuating rod (22) guided in a stem (21) of a piston, and the actuating rod (22) has a preset breaking point (24).

## Revendications

1. Unité d'actionnement pour un véhicule automobile, comprenant un maître-cylindre (1) fixé sur une paroi (3) disposée dans le véhicule automobile,
caractérisée en ce que l'unité d'actionnement comporte des moyens de pliage mécaniques (2, 8, 20, 24, 26, 26', 26'', 32, 33) qui, lors d'un accident entraînant des déformations de la partie avant du véhicule automobile, permettent un basculement du maître- cylindre (1) par rapport à son axe longitudinal (L).

2. Unité d'actionnement selon la revendication 1, caractérisée en ce que le maître-cylindre (1) est fixé au moyen d'un élément de fixation (2, 8) en deux parties, dont les deux parties peuvent effectuer un mouvement de basculement l'une par rapport à l'autre en cas d'accident.

3. Unité d'actionnement selon la revendication 2, caractérisée en ce que l'élément de fixation est composé d'un bourrelet (2) aménagé sur le maître-cylindre (1), et d'une plaque de fixation (8), le bourrelet (2) s'appuyant d'un côté sur la paroi (3) et de l'autre-côté sur la plaque de fixation (8).

4. Unité d'actionnement selon la revendication 3, caractérisée en ce que le bourrelet (2), vu en coupe dans le sens longitudinal du maître-cylindre (1), présente la forme d'un segment de cercle, et en ce que la plaque de fixation (8) est configurée de manière que sa partie avant, tournée vers l'opposé de la paroi (3), soit en contact avec le bourrelet (2) et de manière que sa partie arrière soit espacée par rapport au bourrelet (2).

5. Unité d'actionnement selon l'une des revendications précédentes, caractérisée en ce que le bourrelet (2) aménagé sur le maître-cylindre (1) est relié à la plaque de fixation (8) par l'intermédiaire d'un élément de cisaillement.

6. Unité d'actionnement selon l'une des revendications précédentes, caractérisée en ce que le maître-cylindre (1) est fixé sur la paroi (3) par l'intermédiaire d'une plaque de fixation (8) dont les points de liaison avec la paroi (3) sont configurés de façon à présenter différentes résistances.

7. Unité d'actionnement selon la revendication 6, caractérisée en ce que deux liaisons par vis (9) sont disposées au-dessus d,un axe de basculement prédominant (K), qui s'étend perpendiculairement à l'axe longitudinal (L) du maître-cylindre (1), alors qu'une liaison détachable (19) est disposée en dessous de cet axe de basculement (K).

8. Unité d'actionnement selon la revendication 7, caractérisée en ce que la liaison détachable est constituée par une vis (19) pourvue d'une amorce de rupture (20).

9. Unité d'actionnement selon la revendication 1, caractérisée en ce que le maître-cylindre (1) est pourvu d'un contour (26, 26', 26'', 32) d'absorption des forces.

10. Unité d'actionnement selon la revendication 9, caractérisée en ce que le contour d'absorption des forces est réalisé sous forme d'une partie (32) qui se rétrécit radialement en direction de l'extrémité avant (25, 25', 25'') du maître-cylindre (1).

11. Unité d'actionnement selon la revendication 9, caractérisée en ce que le contour d'absorption des forces est constitué par une surface d'impact oblique (26, 26'').

12. Unité d'actionnement selon la revendication 9 ou la revendication 10, caractérisée en ce que le contour d'absorption des forces est réalisé sous forme d'une surface d'impact courbe (26, 26', 26'').

13. Unité d'actionnement selon la revendication 12, caractérisée en ce que la surface d'impact (26, 26'') est configurée de façon cylindrique ou en forme de calotte.

14. Unité d'actionnement selon la revendication 1, caractérisée en ce que le maître-cylindre (1) peut être actionné par l'intermédiaire d'une tige de commande (22) guidée dans un fût (21) d'un piston, le fût (21') étant pourvu d'au moins une amorce de rupture (33).

15. Unité d'actionnement selon la revendication 1, caractérisée en ce que le maître-cylindre (1) peut être actionné par l'intermédiaire d'une tige de commande (22) guidée dans un fût (21) d'un piston, le fût (21) étant réalisé avec des parois minces.

16. Unité d'actionnement selon l'une des revendications 14 ou 15, caractérisée en ce que le maître-cylindre (1) peut être actionné par l'intermédiaire d'une tige de commande (22) guidée dans un fût (21) d'un piston, la tige de commande (22) comportant un point d'amorce de rupture (24).
